(19) 

**Europäisches Patentamt**
**European Patent Office**
**Office européen des brevets**

(11) **EP 3 477 327 B1**

(12) **EUROPEAN PATENT SPECIFICATION**

(45) Date of publication and mention
of the grant of the patent:
**19.02.2020 Bulletin 2020/08**

(51) Int Cl.:
*G01S 5/02* (2010.01)    *G01S 11/06* (2006.01)
*G01S 5/14* (2006.01)

(21) Application number: **17198614.4**

(22) Date of filing: **26.10.2017**

(54) **MOBILE COMMUNICATION DEVICE AND METHOD FOR OPERATING A MOBILE COMMUNICATION DEVICE**

MOBILKOMMUNIKATIONSVORRICHTUNG UND VERFAHREN ZUM BETRIEB EINER MOBILKOMMUNIKATIONSVORRICHTUNG

DISPOSITIF DE COMMUNICATION MOBILE ET PROCÉDÉ DE COMMANDE D'UN DISPOSITIF DE COMMUNICATION MOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.05.2019 Bulletin 2019/18**

(73) Proprietor: **Vestel Elektronik Sanayi ve Ticaret A.S.**
**45030 Manisa (TR)**

(72) Inventor: **DÖNER, Cagdas**
**45030 Manisa (TR)**

(74) Representative: **Ascherl, Andreas et al**
**KEHL, ASCHERL, LIEBHOFF & ETTMAYR**
**Patentanwälte - Partnerschaft**
**Emil-Riedel-Strasse 18**
**80538 München (DE)**

(56) References cited:
**EP-A1- 1 998 583      WO-A2-2010/059934**
**US-A1- 2014 341 108**

## Description

### TECHNICAL FIELD

The invention relates to a mobile communication device. Further, the present invention relates to a method for operating a mobile communication device.

### BACKGROUND

Although applicable to any wireless mobile device, the present invention will mainly be described in conjunction with mobile communication devices, like e.g. cell phones.

Modern mobile communication devices allow applications to read the signal strength of incoming wireless signals. This for example allows determining the most proximate communication partners or even determining a position of the mobile device based on triangulation techniques.

In mobile devices usually a reception strength, RX value, and/or a Received Signal Strength Indicator, RSSI value, may be provided as signal strength measure. Both the RX value and the RSSI value are indications of the power level being received by the antenna of the mobile device. The difference between the RX value and the RSSI value is that the RX value is measured in milliwat (mW) or decibel-milliwat (dBm) whereas the RSSI value is provided as a percentage. The higher the RSSI value, the stronger the signal is received. Unlike the RX value, the RSSI value is a relative value and the exact process of determining the RSSI value is defined by the chip manufacturer of the respective wireless receiver/transceiver chip. This leads to the same RSSI values in different chip sets referring to different absolute signal strength values. This makes distance and position determination difficult.

Document EP 1 998 583 A1 discloses normalizing from 0% to 100% an RSSI based on a maximum RSSI and the currently received RSSI. Document US 2014 / 341 108 A1 discloses normalizing RSSI values based on a link margin that is the difference between the currently measured RSSI and the minimum magnitude of the received signal that can be acceptably decoded by the receiver. Document WO 2010 / 059 934 A2 discloses a method for wireless position determination using adjusted round trip time measurements.

There is a need for improving signal strength determination in mobile devices.

### SUMMARY

The present invention solves the above problem with a mobile communication device with the features of claim 1 and a method for operating a mobile communication device with the features of claim 5.

The present invention is based on the finding that in the field a large variation of RF devices and RF chipsets exists that each define the RSSI value according to their own internal algorithms. This means that e.g. the same RSSI value on two different cell phones with two different chipsets may mean two different absolute signal strengths. Further, it is in most cell phones not possible to directly access the RX value. However, even if this would be possible, the RX value would not be comparable between different chipsets, since they may have different receiver sensitivities and gain values in the receiving signal chain. For example, in RF communications like Bluetooth, manufacturer A could provide a maximum RSSI value of 100 while Manufacturer B may provide RSSI values anywhere from 0 to 127.

The present invention therefore provides the mobile communication device with the receiver and the normalization unit.

The receiver may be a standard receiver that provides a signal strength value, like e.g. a value that indicates the received signal strength in mW or dBm. The signal strength value may then be further processed by the normalization unit to provide a normalized signal strength indication.

The normalization unit may use parameters of the receiver, the receiver chip set or the full reception signal chain to calculate the normalized signal strength indication. The normalized signal strength indication may e.g. be provided as a value between 0 and 100, wherein 0 refers to the lowest signal strength and 100 refers to the maximum signal strength.

The normalized signal strength indication provides a comparable value for the strength of a received signal over all different chipsets of different chipset manufacturers. Therefore, with the normalized signal strength indication an improved and more accurate distance approximation will be possible. With the improved distance calculation in turn an improved position determination using triangulation techniques will also be possible.

It is understood, that the receiver and the normalization unit may be provided as separated logic units or circuits in the mobile device. It is however also understood, that the normalization unit may be integrated into the receiver. The normalization unit may e.g. be integrated into a logic unit of the receiver that usually provides the signal strength value. Further, the receiver and the normalization unit may be integrated in a system-on-chip that may e.g. form the basis of the mobile communication device's RF capabilities. As an alternative, the normalization unit may e.g. be provided as firmware or software routine of an operating system in the mobile communication device that has access to the low level peripherals and may receive the signal strength value from the receiver.

Further embodiments of the present invention are subject of the further subclaims and of the following description, referring to the drawings.

In an embodiment, the normalization unit may be configured to calculate the normalized signal strength indication based on the signal strength value provided by the receiver and a maximum possible signal strength value and a minimum possible signal strength value and a sensitivity of the receiver.

The normalized signal strength indication, nss, may e.g. be calculated as:

$$nss = ChipsetCoefficient * 100(maxRX - minRX)$$

wherein maxRX refers to the maximum possible signal strength value, minRX refers to the minimum possible signal strength value, and the ChipsetCoefficient may be determined as:

$$ChipsetCoefficient = - RXPower / RXsensitivity$$

wherein RXPower is the signal strength value provided by the receiver and RXsensitivity is the sensitivity of the receiver.

The sensitivity of the receiver or RF sensitivity is one of the key specifications of any radio receiver whether it is used for Wi-Fi, cellular telecommunications broadcast or any other form of wireless communications. The manufacturer of the respective receiver or reception signal chain may therefore provide the sensitivity of the receiver to the normalization unit as well as the maximum possible signal strength value maxRX, and the minimum possible signal strength value minRX.

It is understood, that the normalization unit may comprise a respective parameter memory to store the sensitivity of the receiver as well as the maximum possible signal strength value maxRX, and the minimum possible signal strength value minRX.

In another embodiment, the sensitivity of the receiver may comprise an average sensitivity of the receiver or the sensitivity of the receiver may comprise a measured sensitivity value.

The sensitivity of the receiver may e.g. be stored in the normalization unit as an average sensitivity value for the respective type of receiver. This value may e.g. be determined on samples of the mobile communication device during development of the mobile communication device. If an average value for the sensitivity is defined, no further parameterization step will be necessary during production of the mobile device.

As alternative, the manufacturer of the receiver or the mobile device may measure the sensitivity of the receiver individually for every single device. The measured sensitivity may then e.g. be provided to the normalization unit during a parameterization step in the production of the normalization unit or the mobile communication device.

In an embodiment, the mobile communication device may comprise a mapping unit configured to perform a mapping of the normalized signal strength indication to a distance and provide a respective distance value.

The mapping unit may e.g. convert a normalized signal strength indication that is provided in dBm or mW into a distance value that may e.g. be provided in centimeters, cm, or meters, m. The mapping may e.g. be performed using a respective formula or using a look-up-table, LUT, that provides the respective mapping.

It is understood, that the normalized signal strength indication and the distance may have an inverse relationship. This means that a lower normalized signal strength indication indicates a higher distance and vice versa.

It is understood, that the mapping unit may be integrated into the normalization unit.

In a further embodiment, the mobile communication device may comprise an application interface configured to provide the normalized signal strength indication to an application that is executed on a processor of the mobile communication device.

The application interface may e.g. be provided as an API in the operating system of the mobile communication device. This API may allow application programs to access the normalized signal strength indication or the already mapped distance value. Together with e.g. identifiers or known positions of communication partners the application may then easily determine a position of the mobile communication device.

**BRIEF DESCRIPTION OF THE DRAWINGS**

For a more complete understanding of the present invention and advantages thereof, reference is now made to the following description taken in conjunction with the accompanying drawings. The invention is explained in more detail below using exemplary embodiments which are specified in the schematic figures of the drawings, in which:

Fig. 1    shows a block diagram of an embodiment of a mobile communication device according to the present invention;

Fig. 2    shows a block diagram of another embodiment of a mobile communication device according to the present invention;

Fig. 3    shows a block diagram of another embodiment of a mobile communication device according to the present invention;

Fig. 4    shows a flow diagram of an embodiment of a method according to the present invention; and

Fig. 5    shows a diagram of a possible normalized signal strength indication to distance mapping according to an embodiment of the present invention.

In the figures like reference signs denote like elements unless stated otherwise.

## DETAILED DESCRIPTION OF THE DRAWINGS

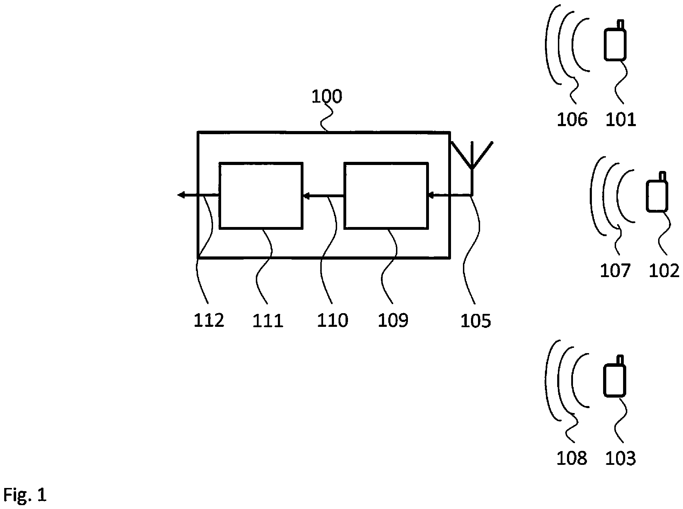

Fig. 1 shows a block diagram of a mobile communication device 100. The mobile communication device 100 comprises an antenna 105 that is coupled to a receiver 109. The receiver 109 is coupled to a normalization unit 111. Around the mobile communication device 100 there are provided three exemplary further mobile communication devices 101, 102, 103 that emit wireless signals 106,107,108.

The antenna 105 receives the wireless signals 106, 107, 108 and provides the received wireless signals 106, 107, 108 to the receiver 109. The receiver 109 determines a signal strength of the received wireless signals 106, 107, 108 and provides respective signal strength values 110 for the single received wireless signals 106, 107, 108. Then the normalization unit 111 normalizes the signal strength values 110 and provides respective normalized signal strength indications 112.

It is understood, that the receiver 109 may perform any further signal handling and signal processing that is necessary to perform the communication functions of the mobile communication device 100. To this end the receiver 109 may e.g. comprise analog and/or digital circuitry e.g. filters, amplifiers, attenuators, A/D converters and the like.

The mobile communication device 100 may e.g. comprise a processor that executes a firmware, an operating system and/or applications. Such applications may e.g. comprise position determination applications that determine the position of the mobile communication device 100 based on received Bluetooth signals. The further mobile communication devices 101, 102, 103 may e.g. be Bluetooth beacons with a known position.

The firmware, operating system or software may now determine the distance between the mobile communication device 100 and the further mobile communication devices 101, 102, 103 based on the normalized signal strength indication 112. If the absolute positions of the further mobile communication devices 101, 102, 103 are known, it may be enough to calculate the relative position of the mobile communication device 100 with relation to the three further mobile communication devices 101, 102, 103 to be able to determine the absolute position of the mobile communication device 100. The firmware, operating system or software may e.g. perform respective triangulation techniques to determine the position of the mobile communication device 100.

It is understood, that the receiver 109 may e.g. provide additional information with the signal strength value 110. The receiver 109 may e.g. further indicate the source of the received wireless signals 106, 107, 108, e.g. one of the further mobile communication devices 101, 102,103. In addition, the receiver 109 may also provide the data transmitted in the wireless signals 106, 107, 108.

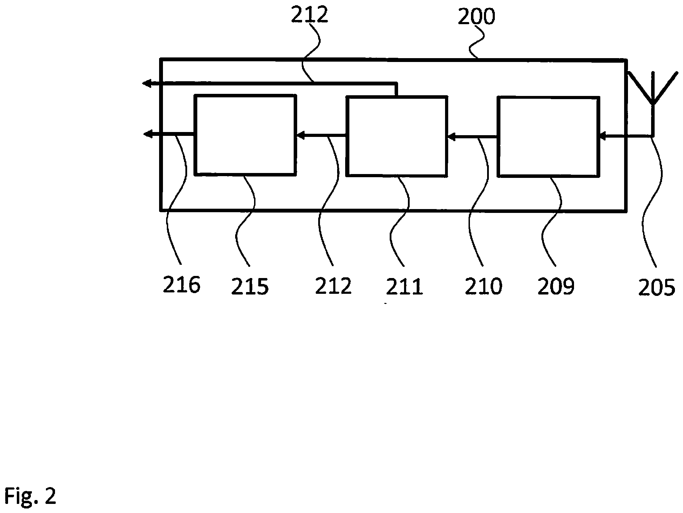

Fig. 2 shows a block diagram of a mobile communication device 200. The mobile communication device 200 is based on the mobile communication device 100. The mobile communication device 200 therefore comprises an antenna 205 that is coupled to a receiver 209. The receiver 209 is coupled to a normalization unit 211. In addition, the mobile communication device 200 comprises a mapping unit 215.

It is understood, that as explained for the mobile communication device 100 in the mobile communication device 200 the antenna 205 receives wireless signals and provides the received wireless signals to the receiver 209. The receiver 209 determines a signal strength of the received wireless signals and provides a respective signal strength value 210. Then the normalization unit 211 normalizes the signal strength value 210 and provide a respective normalized signal strength indication 212.

In addition, in the mobile communication device 200, the mapping unit 215 processes the normalized signal strength indication 212 and determines a corresponding distance value 216. The distance value 216 is a distance, e.g. in meter, that is the corresponding distance to the source of the received wireless signal. The mapping unit 215 may e.g. perform a formula based mapping. As an alternative, the mapping unit 215 may comprise a look-up table that maps the normalized signal strength indication 212 to the respective distance.

If the distances of the mobile communication device 200 to different signal sources are directly provided by the mapping unit 215, e.g. to a firmware, an operating system or an application, these may easily determine the relative location of the mobile communication device 200 with regard to the signal sources.

It can be seen in the mobile communication device 200, that the normalized signal strength indication 212 may also be provided bypassing the mapping unit 215 to e.g. a firmware, an operating system or an application.

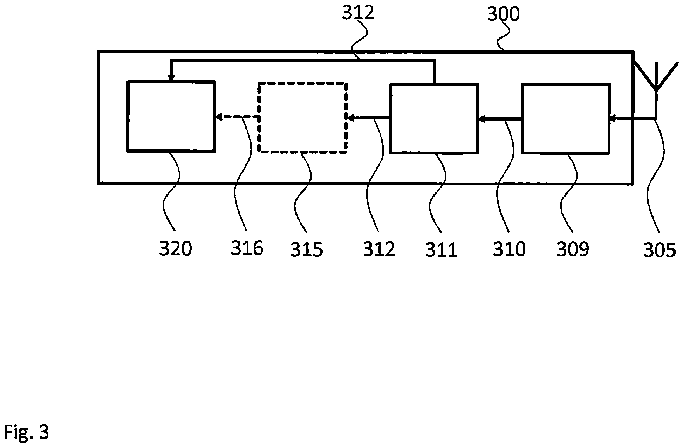

Fig. 3 shows a block diagram of a mobile communication device 300. The mobile communication device 300 is based on the mobile communication device 200. Therefore, the mobile communication device 300 also comprises an antenna 305 that is coupled to a receiver 309. The receiver 309 is coupled to a normalization unit 311. The normalization unit 311 provides the normalized signal strength indication 312 to the mapping unit 215. In addition, an application interface 320 is provided in the mobile communication device 300.

The application interface 320 provides simple access by standardized access functions for applications that may e.g. run in an operating system of the mobile communication device 300.

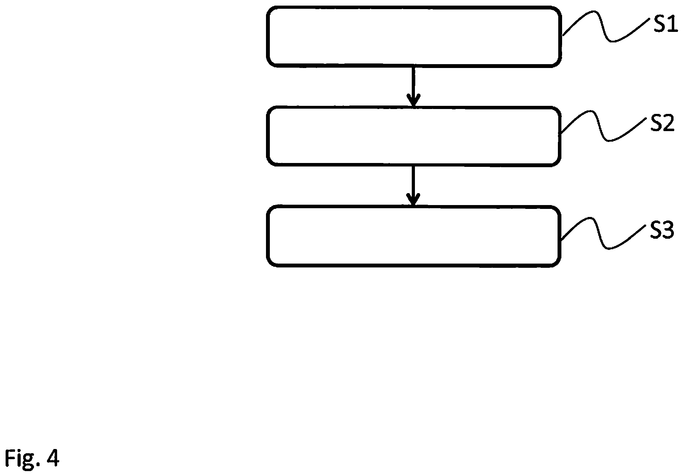

For sake of clarity in the following description of the method based Fig. 4 the reference signs used above in the description of apparatus based Figs. 1 - 3 will be maintained.

Fig. 4 shows a flow diagram of a method for operating a mobile communication device 100, 101, 102, 103, 104, 200, 300.

The method comprises receiving S1 wireless signals 106, 107, 108, determining S2 a signal strength of the received wireless signals 106, 107, 108 and providing a respective signal strength value 110, 210, 310, and normalizing S3 the signal strength value 110, 210, 310 and providing a respective normalized signal strength indication 112, 212, 312.

Normalizing S3 may e.g. comprise calculating the normalized signal strength indication 112, 212, 312 based on the signal strength value 110, 210, 310 provided by the receiver 109, 209, 309 and a maximum possible signal strength value 110, 210, 310 and a minimum possible signal strength value 110, 210, 310 and a sensitivity of the receiver 109, 209, 309.

The normalized signal strength indication, nss, 112, 212, 312 may e.g. be calculated as:

$$nss = ChipsetCoefficient * 100(maxRX - minRX)$$

wherein maxRX refers to the maximum possible signal strength value, minRX refers to the minimum possible signal strength value, and the ChipsetCoefficient may be determined as:

$$ChipsetCoefficient = - RXPower / RXsensitivity$$

wherein RXPower is the signal strength value provided by the receiver and RXsensitivity is the sensitivity of the receiver.

The sensitivity of the receiver 109, 209, 309 may e.g. comprises an average sensitivity of the receiver 109, 209, 309, i.e. the type of receiver, or a measured sensitivity value of the specific receiver 109, 209, 309.

The method may also comprise mapping the normalized signal strength indication 112, 212, 312 to a distance and providing a respective distance value 216, 316.

In addition, the normalized signal strength indication 112, 212, 312 may be provided to an application that is executed on a processor of the mobile communication device 100, 101, 102, 103, 104, 200, 300 via an application interface 320.

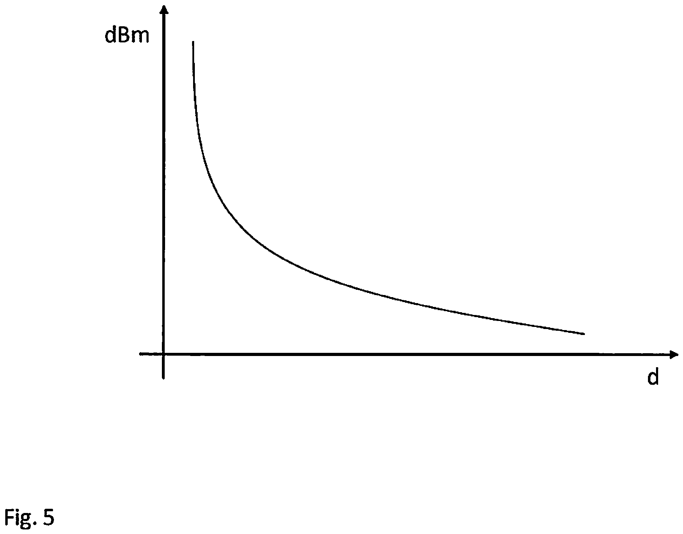

Fig. 5 shows a diagram of a possible normalized signal strength indication to distance mapping.

The mapping in the diagram of Fig. 5 shows that the maximum normalized signal strength indication 112, 212, 312 represents the shortest distance. The smaller the value of the normalized signal strength indication 112, 212, 312 the larger the distance.

The diagram of Fig. 5 only serves to clarify the concept of the present invention. Therefore, no absolute values are provided at the axis of the diagram. It is understood, that the absolute values of the mapping may vary depending on the respective application. The mapping may e.g. be different for Bluetooth devices than for WiFi or UMTS devices or the like.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims.

Thus , the present invention provides a mobile communication device 100, 101, 102, 103, 104, 200, 300 for wireless communication, the mobile communication device 100, 101, 102, 103, 104, 200, 300 comprising an antenna 105, 205, 305 configured to receive wireless signals 106, 107, 108, a receiver 109, 209, 309 that is coupled to the antenna 105, 205, 305 and that is configured to determine a signal strength of the received wireless signals 106, 107, 108 and provide a respective signal strength value 110, 210, 310, and a normalization unit 111, 211, 311 that is configured to normalize the signal strength value 110, 210, 310 and provide a respective normalized signal strength indication 112, 212, 312. Further, the present invention provides a method for operating a mobile communication device 100, 101, 102, 103, 104, 200, 300.

**List of reference signs**

| | |
|---|---|
| 100, 101, 102, 103, 104, 200, 300 | mobile communication device |
| 105, 205, 305 | antenna |
| 106, 107, 108 | wireless signal |
| 109, 209, 309 | receiver |
| 110, 210, 310 | signal strength value |
| 111, 211, 311 | normalization unit |
| 112, 212, 312 | normalized signal strength indication |
| 215, 315 | mapping unit |
| 216, 316 | distance value |
| 320 | application interface |

**Claims**

1.  Mobile communication device (100, 101, 102, 103, 104, 200, 300) for wireless communication, the mobile communication device (100, 101, 102, 103, 104, 200, 300) comprising:

    an antenna (105, 205, 305) configured to receive wireless signals (106, 107, 108),
    a receiver (109, 209, 309) that is coupled to the antenna (105, 205, 305) and that is configured to determine a signal strength of the received wireless signals (106, 107, 108) and provide a respective signal strength value (110, 210, 310), and
    a normalization unit (111, 211, 311) that is configured to normalize the signal strength value (110, 210, 310) and provide a respective normalized signal strength indication (112, 212, 312)
    **characterized in that**
    the normalization unit (111, 211, 311) is configured to calculate the normalized signal strength indication (112, 212, 312) based on the signal strength value (110, 210, 310) provided by the receiver (109, 209, 309) and a maximum possible signal strength value (110, 210, 310) and a minimum possible signal strength value (110, 210, 310) and a sensitivity of the receiver (109, 209, 309) based on the formula

$$nss = ChipsetCoefficient * 100(maxRX - minRX)$$

    wherein nss refers to the normalized signal strength indication (112, 212, 312), maxRX refers to the maximum possible signal strength value, minRX refers to the minimum possible signal strength value, and the ChipsetCoefficient is determined as

$$ChipsetCoefficient = - RXPower / RXsensitivity$$

    wherein RXPower is the signal strength value (110, 210, 310) provided by the receiver (109, 209, 309) and RXsensitivity is the sensitivity of the receiver (109, 209, 309).

2.  Mobile communication device (100, 101, 102, 103, 104, 200, 300) according to claim 2, wherein the sensitivity of the receiver (109, 209, 309) comprises an average sensitivity of the receiver (109, 209, 309) or wherein the sensitivity of the receiver (109, 209, 309) comprises a measured sensitivity value.

3. Mobile communication device (100, 101, 102, 103, 104, 200, 300) according to any one of the preceding claims, comprising a mapping unit (215, 315) configured to perform a mapping of the normalized signal strength indication (112, 212, 312) to a distance and provide a respective distance value (216, 316).

4. Mobile communication device (100, 101, 102, 103, 104, 200, 300) according to any one of the preceding claims, comprising an application interface (320) configured to provide the normalized signal strength indication (112, 212, 312) to an application that is executed on a processor of the mobile communication device (100, 101, 102, 103, 104, 200, 300).

5. Method for operating a mobile communication device (100, 101, 102, 103, 104, 200, 300), the method comprising:

   receiving (S1) wireless signals (106,107,108),
   determining (S2) a signal strength of the received wireless signals (106, 107, 108) and providing a respective signal strength value (110, 210, 310), and
   normalizing (S3) the signal strength value (110, 210, 310) and providing a respective normalized signal strength indication (112, 212, 312);
   **characterized in that**
   normalizing comprises calculating the normalized signal strength indication (112, 212, 312) based on the signal strength value (110, 210, 310) provided by the receiver (109, 209, 309) and a maximum possible signal strength value (110, 210, 310) and a minimum possible signal strength value (110, 210, 310) and a sensitivity of the receiver (109, 209, 309) based on the formula

$$nss = ChipsetCoefficient * 100(maxRX - minRX)$$

   wherein nss refers to the normalized signal strength indication (112, 212, 312), maxRX refers to the maximum possible signal strength value, minRX refers to the minimum possible signal strength value, and the Chipset-Coefficient is determined as

$$ChipsetCoefficient = - RXPower / RXsensitivity$$

   wherein RXPower is the signal strength value (110, 210, 310) provided by the receiver (109, 209, 309) and RXsensitivity is the sensitivity of the receiver (109, 209, 309).

6. Method according to claim 5, wherein the sensitivity of the receiver (109, 209, 309) comprises an average sensitivity of the receiver (109, 209, 309) or wherein the sensitivity of the receiver (109, 209, 309) comprises a measured sensitivity value.

7. Method according to any one of the preceding claims 5 and 6, comprising mapping the normalized signal strength indication (112, 212, 312) to a distance and providing a respective distance value (216, 316).

8. Method according to any one of the preceding claims 5 to 7, comprising providing the normalized signal strength indication (112, 212, 312) to an application that is executed on a processor of the mobile communication device (100, 101, 102, 103, 104, 200, 300) via an application interface (320).

**Patentansprüche**

1. Mobile Kommunikationsvorrichtung (100, 101, 102, 103, 104, 200, 300) für die drahtlose Kommunikation, wobei die mobile Kommunikationsvorrichtung (100, 101, 102, 103, 104, 200, 300) aufweist:

   eine Antenne (105, 205, 305), die konfiguriert ist, um drahtlose Signale (106, 107, 108) zu empfangen,
   einen Empfänger (109, 209, 309), der mit der Antenne (105, 205, 305) gekoppelt ist und der konfiguriert ist, um eine Signalstärke der empfangenen drahtlosen Signale (106, 107, 108) zu bestimmen und einen entsprechenden Signalstärkewert (110, 210, 310) bereitzustellen, und
eine Normalisierungseinheit (111, 211, 311), die konfiguriert ist, um den Signalstärkewert (110, 210, 310) zu normalisieren und eine entsprechende normalisierte Signalstärkeangabe (112, 212, 312) bereitzustellen, **dadurch gekennzeichnet, dass**
die Normalisierungseinheit (111, 211, 311) konfiguriert ist, um die normierte Signalstärkeangabe (112, 212, 312) basierend auf dem vom Empfänger (109, 209, 309) bereitgestellten Signalstärkewert (110, 210, 310) und einem maximal möglichen Signalstärkewert (110, 210, 310) und einem minimal möglichen Signalstärkewert (110, 210, 310) sowie einer Empfindlichkeit des Empfängers (109, 209, 309) basierend auf der folgenden Formel zu berechnen

$$nss = ChipsetCoefficient * 100(maxRX - minRX)$$

wobei nss sich auf die normierte Signalstärkeangabe (112, 212, 312) bezieht, maxRX sich auf den maximal möglichen Signalstärkewert bezieht, minRX sich auf den minimal möglichen Signalstärkewert bezieht und der ChipsetCoefficient bestimmt wird als

$$ChipsetCoefficient = - RXPower / RXsensitivity$$

wobei RXPower der Signalstärkewert (110, 210, 310) ist, der durch den Empfänger (109, 209, 309) bereitgestellt wird, und RXsensitivity die Empfindlichkeit des Empfängers (109, 209, 309) ist.

**2.** Mobile Kommunikationsvorrichtung (100, 101, 102, 103, 104, 200, 300) nach Anspruch 2, wobei die Empfindlichkeit des Empfängers (109, 209, 309) eine mittlere Empfindlichkeit des Empfängers (109, 209, 309) aufweist oder wobei die Empfindlichkeit des Empfängers (109, 209, 309) einen gemessenen Empfindlichkeitswert aufweist.

**3.** Mobile Kommunikationsvorrichtung (100, 101, 102, 103, 104, 200, 300) nach einem der vorhergehenden Ansprüche, aufweisend eine Abbildungseinheit (215, 315), die konfiguriert ist, um eine Zuordnung der normierten Signalstärkeangabe (112, 212, 312) zu einer Entfernung durchzuführen und einen entsprechenden Entfernungswert (216, 316) bereitzustellen.

**4.** Mobile Kommunikationsvorrichtung (100, 101, 102, 103, 104, 200, 300) nach einem der vorhergehenden Ansprüche, aufweisend eine Anwendungsschnittstelle (320), die konfiguriert ist, um die normierte Signalstärkeangabe (112, 212, 312) einer Anwendung bereitzustellen, die auf einem Prozessor der mobilen Kommunikationsvorrichtung (100, 101, 102, 103, 104, 200, 300) ausgeführt wird.

**5.** Verfahren zum Betreiben einer mobilen Kommunikationsvorrichtung (100, 101, 102, 103, 104, 200, 300), wobei das Verfahren aufweist:

Empfangen (S1) von drahtlosen Signalen (106, 107, 108),
Bestimmen (S2) einer Signalstärke der empfangenen drahtlosen Signale (106, 107, 108) und Bereitstellen eines entsprechenden Signalstärkewertes (110, 210, 310), und
Normieren (S3) des Signalstärkewertes (110, 210, 310) und Bereitstellen einer entsprechenden normierten Signalstärkeangabe (112, 212, 312);
**dadurch gekennzeichnet, dass**
das Normalisieren aufweist: das Berechnen der normierten Signalstärkeangabe (112, 212, 312) basierend auf dem vom Empfänger (109, 209, 309) bereitgestellten Signalstärkewert (110, 210, 310) und einem maximal möglichen Signalstärkewert (110, 210, 310) und einem minimal möglichen Signalstärkewert (110, 210, 310) sowie einer Empfindlichkeit des Empfängers (109, 209, 309) basierend auf der Formel

$$nss = ChipsetCoefficient * 100(maxRX - minRX)$$

wobei nss sich auf die normierte Signalstärkeangabe (112, 212, 312) bezieht, maxRX sich auf den maximal möglichen Signalstärkewert bezieht, minRX sich auf den minimal möglichen Signalstärkewert bezieht und der ChipsetCoefficient bestimmt wird als

$$\text{ChipsetCoefficient} = - \text{RXPower} / \text{RXsensitivity}$$

wobei RXPower der Signalstärkewert (110, 210, 310) ist, der durch den Empfänger (109, 209, 309) bereitgestellt wird, und RXsensitivity die Empfindlichkeit des Empfängers (109, 209, 309) ist.

6. Verfahren nach Anspruch 5, wobei die Empfindlichkeit des Empfängers (109, 209, 309) eine durchschnittliche Empfindlichkeit des Empfängers (109, 209, 309) aufweist oder wobei die Empfindlichkeit des Empfängers (109, 209, 309) einen gemessenen Empfindlichkeitswert aufweist.

7. Verfahren nach einem der vorhergehenden Ansprüche 5 und 6, aufweisend das Abbilden der normierten Signalstärkeangabe (112, 212, 312) auf einen Abstand und das Bereitstellen eines entsprechenden Entfernungswertes (216, 316).

8. Verfahren nach einem der vorhergehenden Ansprüche 5 bis 7, aufweisend das Bereitstellen der normierten Signalstärkeangabe (112, 212, 312) für eine Anwendung, die auf einem Prozessor der mobilen Kommunikationsvorrichtung (100, 101, 102, 103, 104, 200, 300) ausgeführt wird über eine Anwendungsschnittstelle (320).

**Revendications**

1. Dispositif de communication mobile (100, 101, 102, 103, 104, 200, 300) pour communication sans fil, le dispositif de communication mobile (100, 101, 102, 103, 104, 200, 300) comprenant :

une antenne (105, 205, 305) configurée pour recevoir des signaux sans fil (106, 107, 108),
un récepteur (109, 209, 309) qui est couplé à l'antenne (105, 205, 305) et qui est configuré pour déterminer une intensité de signal des signaux sans fil reçus (106, 107, 108) et fournir une valeur d'intensité de signal respective (110, 210, 310), et
une unité de normalisation (111, 211, 311) qui est configurée pour normaliser la valeur d'intensité du signal (110, 210, 310) et fournir une indication normalisée respective d'intensité du signal (112, 212, 312)
**caractérisé en ce que**
l'unité de normalisation (111, 211, 311) est configurée pour calculer l'indication d'intensité de signal normalisée (112, 212, 312) sur la base de la valeur d'intensité de signal (110, 210, 310) fournie par le récepteur (109, 209, 309) et une valeur d'intensité de signal maximale possible (110, 210, 310) et une valeur d'intensité de signal minimale possible (110, 210, 310) et une sensibilité du récepteur (109, 209, 309) selon la formule suivante

$$\text{nss} = \text{ChipsetCoefficient} * 100(\text{maxRX} - \text{minRX})$$

dans laquelle nss se réfère à l'indication normalisée d'intensité du signal (112, 212, 312), maxRX se réfère à la valeur maximale possible d'intensité du signal, minRX se réfère à la valeur minimale possible d'intensité du signal, et le ChipsetCoefficient est déterminé comme suit

$$\text{ChipsetCoefficient} = - \text{RXPower} / \text{RXsensitivity}$$

dans laquelle RXPower est la valeur de puissance de signal (110, 210, 310) fournie par le récepteur (109, 209, 309) et RXsensitivity est la sensibilité du récepteur (109, 209, 309).

2. Dispositif de communication mobile (100, 101, 102, 103, 104, 200, 300) selon la revendication 2, dans lequel la sensibilité du récepteur (109, 209, 309) comprend une sensibilité moyenne du récepteur (109, 209, 309) ou dans lequel la sensibilité du récepteur (109, 209, 309) comprend une valeur de sensibilité mesurée.

3. Dispositif de communication mobile (100, 101, 102, 103, 104, 200, 300) selon l'une quelconque des revendications précédentes, comprenant une unité de cartographie (215, 315) configurée pour effectuer une cartographie de l'indication normalisée d'intensité de signal (112, 212, 312) à une distance et fournir une valeur de distance respective (216, 316).

**4.** Dispositif de communication mobile (100, 101, 102, 103, 104, 200, 300) selon l'une quelconque des revendications précédentes, comprenant une interface d'application (320) configurée pour fournir l'indication normalisée d'intensité de signal (112, 212, 312) à une application qui est exécutée sur un processeur du dispositif de communication mobile (100, 101, 102, 103, 104, 200, 300).

**5.** Procédé de fonctionnement d'un dispositif de communication mobile (100, 101, 102, 103, 104, 200, 300), le procédé comprenant :

la réception (S1) de signaux sans fil (106, 107, 108),
déterminer (S2) une intensité de signal des signaux sans fil reçus (106, 107, 108) et fournir une valeur d'intensité de signal respective (110, 210, 310), et
la normalisation (S3) de la valeur d'intensité du signal (110, 210, 310) et la fourniture d'une indication normalisée respective d'intensité du signal (112, 212, 312) ;
**caractérisé en ce que**
la normalisation comprend le calcul de l'indication d'intensité de signal normalisée (112, 212, 312) sur la base de la valeur d'intensité de signal (110, 210, 310) fournie par le récepteur (109, 209, 309) et une valeur d'intensité de signal maximale possible (110, 210, 310) et une valeur d'intensité de signal minimale possible (110, 210, 310) et une sensibilité du récepteur (109, 209, 309) basée sur la formule

$$nss = ChipsetCoefficient * 100(maxRX - minRX)$$

dans laquelle nss se réfère à l'indication normalisée d'intensité du signal (112, 212, 312), maxRX se réfère à la valeur maximale possible d'intensité du signal, minRX se réfère à la valeur minimale possible d'intensité du signal, et le ChipsetCoefficient est déterminé comme suit

$$ChipsetCoefficient = - RXPower / RXsensitivity$$

dans laquelle RXPower est la valeur de puissance de signal (110, 210, 310) fournie par le récepteur (109, 209, 309) et RXsensitivity est la sensibilité du récepteur (109, 209, 309).

**6.** Procédé selon la revendication 5, dans lequel la sensibilité du récepteur (109, 209, 309) comprend une sensibilité moyenne du récepteur (109, 209, 309) ou dans lequel la sensibilité du récepteur (109, 209, 309) comprend une valeur de sensibilité mesurée.

**7.** Procédé selon l'une quelconque des revendications 5 et 6 précédentes, comprenant le mappage de l'indication normalisée de force de signal (112, 212, 312) à une distance et la fourniture d'une valeur de distance respective (216, 316).

**8.** Procédé selon l'une quelconque des revendications 5 à 7 précédentes, comprenant la fourniture de l'indication normalisée d'intensité de signal (112, 212, 312) à une application qui est exécutée sur un processeur du dispositif de communication mobile (100, 101, 102, 103, 104, 200, 300) via une interface application (320).

Fig. 1

Fig. 2

Fig. 3

Fig. 4

Fig. 5

**EP 3 477 327 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1998583 A1
- US 2014341108 A1
- WO 2010059934 A2